# EUROPÄISCHE PATENTANMELDUNG

(11) **EP 1 536 032 A1**
(43) Veröffentlichungstag der Anmeldung: **01.06.2005**
(21) Anmeldenummer: 04026757.7
(22) Anmeldetag: 11.11.2004
(51) Int. Cl.: C23C 8/16, H01M 8/02, F28F 21/00

(54) **Verfahren zur Oxidation eines metallischen Werkstücks, insbesondere für Brennstoffzellen**

(30) Priorität: 27.11.2003 DE 10356113
(71) Anmelder: Behr GmbH & Co. KG, 70469 Stuttgart (DE)
(72) Erfinder: Damsohn, Herbert, Dr.-Ing., 73773 Aichwald (DE); Kaiser, Wolfram, Dr., 70191 Stuttgart (DE); Pfender, Conrad, Dr.-Ing., 74354 Besingheim (DE); Watzlawski, Markus, 73760 Ostfildern (DE)

(57) **Zusammenfassung**

Verfahren zur Herstellung eines Werkstücks, dessen Werkstoff mehrere Metalle enthält, bei dem das Werkstück einer Atmosphäre ausgesetzt wird, wobei eine Temperatur und ein Sauerstoff-Partialdruck der Atmosphäre derart eingestellt werden, daß für zumindest zwei Metalle des Werkstoffs eine Bildung jeweils höchstens eines Metalloxides oder Mischoxides gefördert und eine Bildung jeweils aller anderen Metalloxide unterdrückt wird oder daß für zumindest ein erstes Metall des Werkstoffs eine Bildung eines Metalloxides gefördert und eine Bildung aller anderen Metalloxide unterdrückt wird, und daß für zumindest ein zweites Metall des Werkstoffs eine Bildung aller Metalloxide unterdrückt wird, wonach die Temperatur und/oder der Sauerstoff-Partialdruck der Atmosphäre derart geändert werden, daß für das zumindest eine zweite Metall des Werkstoffs eine Bildung höchstens eines Metalloxides gefördert und eine Bildung aller anderen Metalloxide unterdrückt wird.

## Beschreibung

Die Erfindung betrifft ein Verfahren zur Herstellung eines Werkstück, dessen Werkstoff mehrere Metalle enthält, sowie einen Wärmeübertrager und einen Brennstoffzellenstapel, bei denen ein solches Verfahren zur Anwendung kommt.

Enthält der Werkstoff eines Werkstücks mehrere Metalle, liegen die einzelnen Metalle neben der metallischen Form oft auch als Metalloxid vor. Besonders in der Nähe der Oberfläche des Werkstücks bilden sich Metalloxide beispielsweise durch einen Kontakt mit Luftsauerstoff. Da viele Metalle mit Sauerstoff jeweils mehrere unterschiedliche Metalloxide bilden, weist ein Werkstück der eingangs genannten Art üblicherweise, insbesondere an seiner Oberfläche, eine Vielzahl verschiedenster Metalloxide mit unterschiedlicher chemischer Stabilität auf.

Wird ein solches Werkstück in einen Wärmeübertrager, einen chemischen Reaktor, einen Brennstoffzellenstapel oder eine ähnliche Vorrichtung eingesetzt, so wird seine Oberfläche während eines Betriebes der jeweiligen Vorrichtung häufig Bedingungen ausgesetzt, die eine reduzierende Wirkung auf einige der vorliegenden Metalloxide haben. Besonders in einer Atmosphäre mit hoher Temperatur (mehrere 100°C) und niedrigem Sauerstoff-Partialdruck (< 10⁻³ mbar) zerfallen viele Metalloxide in ihre Bestandteile, nämlich das jeweilige Metall und gasförmigen Stauerstoff. Das Metall tritt dann unter Umständen in atomarer Form und/oder unter Bildung von gasförmigen Metalloxiden und/oder -hydroxiden in eine Umgebung des betreffenden Werkstücks aus. Solche Metallgase können die Funktionsweise der jeweiligen Vorrichtung beeinträchtigen und sind deshalb unerwünscht. Analog dazu findet in Atmosphären mit hohem Sauerstoffpartialdruck eine Oxidation gegebenenfalls freiliegender metallischer Oberflächen statt, die zur Bildung flüssiger oder gasförmiger Verbindungen, z.B. Oxide, führen und die Funktionsweise der Bauteile bzw. Systeme beeinträchtigen können. In beiden Atmosphären ist das Abdampfen von Metalloxiden aufgrund des stoffeigenen, temperaturabhängigen Dampfdrucks möglich.

In der EP 0 908 529 A1 ist ein Verfahren zum Herstellen einer Hochtemperaturbrennstoffzelle beschrieben, bei dem einem chromhaltigen Bauelement eine Mischung mit zwei gasförmigen Reaktanden bei derartigen Bedingungen zugeführt wird, daß auf der Oberfläche des Bauelementes nur ein bestimmtes Chromoxid entsteht. Hierdurch soll eine Sperre gegenüber der Verdampfung von flüchtigen chromhaltigen Verbindungen aufgebaut werden. Die geringe elektrische Leitfähigkeit einer derartigen Sperrschicht wirkt sich jedoch nachteilig auf die Leistungsfähigkeit der betreffenden Brennstoffzelle aus.

Wird stattdessen eine Mittel- oder Niedertemperatur-Brennstoffzelle verwendet, treten aufgrund der niedrigeren Temperaturen weniger Metallgase aus dem Werkstoff aus. Da eine Brennstoffzelle üblicherweise Wärmeübertrager und/oder Reformatoren vorgeschaltet sind, die bei sehr hohen Temperaturen betrieben werden, erhält man jedoch trotzdem einen Eintrag von unerwünschten Metallgasen aus den vorgeschalteten Vorrichtungen in die Brennstoffzelle. Ersetzt man das Chrom durch Stahl oder einen anderen vergleichbaren Werkstoff, hat man es mit einem Gemisch aus mehreren Metallen zu tun, so daß aufgrund der bereits erwähnten Vielfalt an Metalloxiden ein Ausgasen derselben nur schwer beherrschbar ist.

Es ist deshalb eine Aufgabe der Erfindung, ein Verfahren zur Herstellung eines Werkstücks, dessen Werkstoff mehrere Metalle enthält, bereitzustellen, durch das ein Ausgasen von Metallen oder Metalloxiden vermeidbar oder zumindest reduzierbar ist. Ebenso ist es Aufgabe der Erfindung, einen Wärmeübertrager oder einen Brennstoffzellenstapel bereitzustellen, bei dem das Ausgasen oder Abdampfen von Metallen oder Metalloxiden oder anderen Metallbasierten Verbindungen vermeidbar oder reduzierbar ist.

Diese Aufgabe wird durch ein Verfahren nach einem der Ansprüche 1 und 2 sowie durch einen Wärmeübertrager und einen Brennstoffzellenstapel nach Anspruch 9 gelöst.

Grundgedanke der Erfindung ist es, ein Werkstück der eingangs genannten Art einer Atmosphäre auszusetzen, in der für die einzelnen Metalle des Werkstoffs des Werkstücks jeweils nur das stabilste seiner Metalloxide gebildet wird, wohingegen eine Bildung anderer Metalloxide unterdrückt wird. Hierdurch wird insbesondere die Aufgabe gelöst, für mehrere Metalle gleichzeitig ein Ausgasen der Metalle oder von Metalloxiden zu reduzieren.

Gemäß Anspruch 1 werden hierzu eine Temperatur und ein Sauerstoff-Partialdruck der Atmosphäre derart eingestellt, daß für mehrere Metalle eine Bildung jeweils höchstens eines Metalloxides gefördert und eine Bildung anderer Metalloxide unterdrückt wird. Hierdurch wird insbesondere eine gleichzeitige Bildung des jeweils stabilsten Metalloxides mehrerer Metalle ermöglicht.

Gemäß Anspruch 2 werden eine Temperatur und ein Sauerstoff-Partialdruck der Atmosphäre zunächst derart eingestellt, daß für ein erstes Metall eine Bildung des stabilsten Metalloxides ermöglicht und eine Bildung anderer Metalloxide unterdrückt wird, wobei für ein zweites Metall kein stabiles Metalloxid gebildet wird. In einem nachfolgenden Schritt werden die Temperatur und/oder der Sauerstoff-Partialdruck der Atmosphäre derart geändert, daß auch für das zweite Metall eine Bildung höchstens eines Metalloxides gefördert und eine Bildung aller anderen Metalloxide unterdrückt wird. Hierdurch wird die Bildung des jeweils stabilsten Metalloxides für mehrere Metalle auch in dem Fall ermöglicht, in dem die jeweils erforderlichen Bedingungen unterschiedlich sind. In diesem Fall ist es vorteilhaft, wenn zunächst das stabilste der erwünschten Metalloxide erzeugt wird, danach das Metall mit dem zweitstabilsten Metalloxid oxidiert wird, dann das drittstabilste Oxid gebildet wird usw.

Eine (chemische) Stabilität im Sinne der Erfindung ist quantitativ durch den Betrag der bei der Bildung des jeweiligen Metalloxides freiwerdenden Standard-Gibbs-Enthalpie ΔG° gegeben. Die Standard-Gibbs-Enthalpie ist dabei durch die Gleichung ΔG° = H - TΔS definiert, wobei H die Enthalpie, T die Temperatur und S die Entropie ist.

Gemäß einer vorteilhaften Ausgestaltung der Erfindung wird während der Behandlung des Werkstücks die Temperatur der Atmosphäre im Wesentlichen konstant gehalten. Besonders vorteilhaft sind Temperaturen zwischen 600°C und 900°C, da diese Temperaturen mit bekannten Öfen einfach erreichbar sind und die Bildung der gewünschten Metalloxide mit ausreichender Reaktionsgeschwindigkeit vonstatten geht. Im Falle einer im Wesentlichen konstanten Temperatur werden die entscheidenden Eigenschaften der Atmosphäre dann durch deren Sauerstoff-Partialdruck bestimmt.

Gemäß einer bevorzugten Ausführungsform der Erfindung wird der Sauerstoff-Partialdruck durch ein chemisches Reaktionsgleichgewicht zwischen mehreren Verbindungen in der Atmosphäre geregelt. Eine erste sauerstoffenthaltende Verbindung steht dabei im Gleichgewicht mit zumindest einer zweiten Verbindung und Sauerstoff. Durch eine Reaktion der zweiten Verbindung mit dem Sauerstoff wird die erste Verbindung gebildet, wobei Sauerstoff verbraucht wird. Im Gegensatz dazu wird bei der Rückreaktion Sauerstoff freigesetzt. Der Sauerstoff-Partialdruck der Atmosphäre kann also durch eine Verschiebung dieses Reaktionsgleichgewichts eingestellt werden, wobei die Verschiebung des Gleichgewichts über ein Mischungsverhältnis zwischen der ersten und der zweiten Verbindung von außen, vorgebbar ist. Die erforderlichen Bedingungen der Atmosphäre für die Bildung der gewünschten Metalloxide sind dadurch auf einfache Weise mittels des Mischungsverhältnisses zwischen der ersten und der zweiten Verbindung in Zusammenhang mit der Temperatur einstellbar.

Eine relativ einfache und kostengünstige Atmosphäre ist durch ein System gegeben, bei dem die erste Verbindung Wasser und die zweite Verbindung Wasserstoff ist. Hierbei besteht ein chemisches Reaktionsgleichgewicht zwischen dem Wasser einerseits und dem Wasserstoff und unter Umständen nur in Spuren enthaltenem Sauerstoff andererseits. Der Wasserstoff wird hierzu besonders bevorzugt in einem Befeuchter mit Wasser angereichert, wobei mittels des Befeuchters ein Grad der Befeuchtung des Wasserstoffs und damit das Mischungsverhältnis zwischen dem Wasser und dem Wasserstoff einstellbar ist.

Das erfindungsgemäße Verfahren eignet sich insbesondere für Stähle, die zumindest eines der Elemente Eisen, Chrom, Nickel, Titan, Molybdän, Mangan, Kupfer und/oder Niob enthalten.

Die Erfindung wird ebenfalls gelöst durch einen Wärmeübertrager oder einen Brennstoffzellenstapel gemäß Anspruch 9, der im Ganzen oder in Teilen einem erfindungsgemäßen Verfahren unterzogen wird.

Die Erfindung wird nachfolgend anhand zweier Ausführungsbeispiele unter Bezugnahme auf die Zeichnungen erläutert. Es zeigen:
- Fig. 1 eine Auftragung der Standard-Gibbs-Enthalpien ΔG° für verschiedene Metalloxide zweier Metalle M1 und M2 über der Temperatur T und
- Fig. 2 eine Auftragung der Standard-Gibbs-Enthalpien ΔG° für verschiedene Metalloxide zwei Metalle M1 und M3 über der Temperatur T.

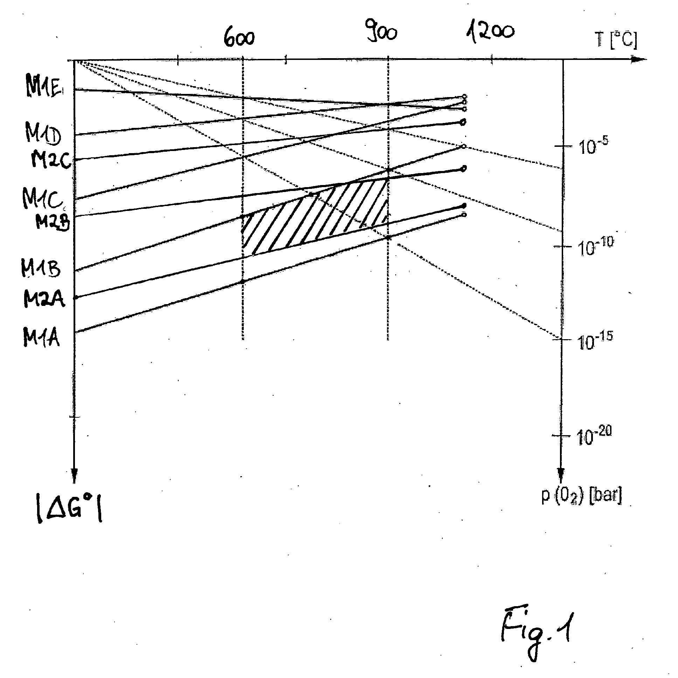

Wie in Fig. 1 dargestellt ist, ergibt sich aufgrund der Definitionsgleichung für die Standard-Gibbs-Enthalpie ΔG° ein linearer Verlauf in Abhängigkeit von der Temperatur T. Mit zunehmender Temperatur T nimmt der Betrag von ΔG° für die Metalloxide M1A, M1B, M1C und M1D des Metalls M1 sowie für die Metalloxide M2A, M2B und M2D des Metalls M2 ab, wohingegen der Betrag von ΔG° für das Metalloxid M1E des Metalls M1 mit zunehmender Temperatur T zunimmt. Da die Standard-Gibbs-Enthalpie ΔG° ein Maß für die chemische Stabilität des jeweiligen Metalloxides ist, ist aus Fig. 1 ersichtlich, daß das Metalloxid M1A bei allen gezeigten Temperaturen das stabilste Oxid des Metalls M1 ist, das Metalloxid M1 B das zweitstabilste Oxid des Metalls M1 usw.. Ebenso ist das Oxid M2A das stabilste Metalloxid des Metalls M2, M2B das zweitstabilste usw..

Ebenso in Fig. 1 aufgetragen ist der Sauerstoff-Partialdruck p, der für die Bildung der jeweiligen Metalloxide bei den jeweiligen Temperaturen notwendig ist (punktierte Linien). Dies bedeutet, daß jede Atmosphäre, der ein Werkstück gemäß der vorliegenden Erfindung ausgesetzt wird, durch einen Punkt in dem in Fig. 1 gezeigten Diagramm aufgrund der betreffenden Temperatur und des betreffenden Sauerstoff-Partialdrucks darstellbar ist.

Befindet sich nun der für eine Atmosphäre maßgebliche Punkt in dem Diagramm in Fig. 1 oberhalb der die Standard-Gibbs-Enthalpie ΔG° kennzeichnenden Geraden eines bestimmten Metalloxids, so wird eine Bildung des betreffenden Metalloxids in der betreffenden Atmosphäre gefördert. Das Metalloxid wird dann in der betreffenden Atmosphäre stabilisiert. Befindet sich der die Atmosphäre kennzeichnende Punkt dagegen unterhalb einer solchen Geraden, so wird das betreffende Metalloxid in der betreffenden Atmosphäre zurückgebildet und eine Bildung des Metalloxids wird unterbunden.

Sollen nun für beide Metalle M1 und M2 jeweils die stabilsten Metalloxide (M1A bzw. M2A) stabilisiert werden, eine Bildung aller anderen Metalloxide der beiden Metalle M1 und M2 dagegen unterbunden werden, so muß die Atmosphäre durch einen Punkt darstellbar sein, der sowohl oberhalb der Geraden für das Metalloxid M1A als auch oberhalb der Geraden für das Metalloxid M2A liegt. Darüber hinaus muß der Punkt unterhalb der Geraden für die jeweils zweitstabilsten Metalloxide der beiden Metalle M1 und M2 liegen. Liegt der die Atmosphäre kennzeichnende Punkt also in dem schraffierten Bereich von Fig. 1, so werden die Metalloxide M1A und M2A gleichzeitig stabilisiert, wogegen alle weiteren gezeigten Metalloxide unterdrückt werden.

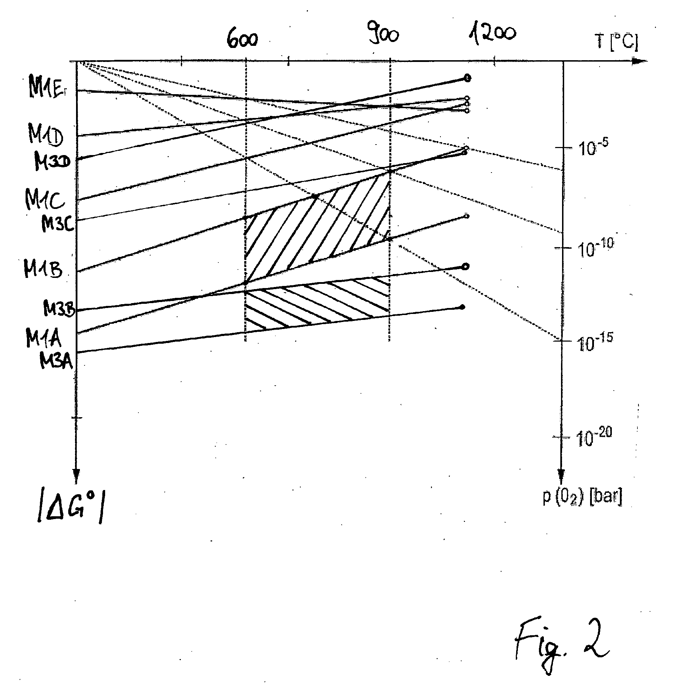

Fig. 2 zeigt in analoger Weise zu Fig. 1 Stabilitätsgeraden von Metalloxiden M1A, M1B, M1C, M1 D und M1 E eines Metalls M1 sowie von Metalloxiden M3A, M3B, M3C und M3D eines Metalls M3. Hier zeigt sich, daß für das Metall M3 zwei Oxide (M3A und M3B) existieren, die in dem vorteilhaften Temperaturbereich zwischen 600° C und 900° C stabiler sind als das stabilste Metalloxid M1A des Metalls M1. Um auch hier zu erreichen, daß beide Metalle M1 und M3 nur in Form ihres jeweils stabilsten Oxids stabilisiert werden, wird das erfindungsgemäße Verfahren in zumindest zwei Schritten durchgeführt. In einem ersten Schritt wird das erste Metalloxid M3A stabilisiert, indem das betreffende Werkstück einer Atmosphäre ausgesetzt wird, die durch einen Punkt in dem unteren schraffierten Bereich darstellbar ist. In einem weiteren Schritt wird eine Atmosphäre gewählt, die durch einen Punkt in dem oberen schraffierten Bereich darstellbar ist. Dadurch wird das Metall M1 nur in Form seines stabilsten Metalloxids M1A stabilisiert. Eine Bildung des Metalloxids M3B ist, obwohl sie grundsätzlich in einer solchen Atmosphäre begünstigt ist, nicht zu befürchten, da in der Nähe der Oberfläche befindliche Atome des Metalls M3 bereits in Form des noch stabileren Metalloxids M3A gebunden sind. Der Übergang von dem unteren in den oberen schraffierten Bereich wird vorzugsweise über eine Einstellung des Sauerstoff-Partialdrucks P bewerkstelligt, wobei die Temperatur T vorzugsweise im Wesentlichen beibehalten wird.

Enthält ein Werkstoff eines Werkstücks mehr als zwei Metalle, können durch eine Aneinanderreihung bzw. Kombination der Verfahrensschritte gemäß Fig. 1 und Fig. 2 die jeweils stabilsten Metalloxide für beliebig viele Metallbestandteile des Werkstoffs dargestellt werden. Existiert ein Mischoxid, das unter Beteiligung zweier oder mehrerer Metalle gebildet wird und das stabiler ist als das stabilste reine Metalloxid eines der beiden Metalle, kann der Schutz der Werkstückoberfläche auch durch Erzeugung eines Mischoxides analog zur oben geschilderten Vorgehensweise erfolgen.

Die Erfindung wurde unter anderem anhand der Beispiele des Wärmeübertragers und des Brennstoffzellenstapels dargestellt. Es wird jedoch darauf hingewiesen, daß das vorliegende Verfahren auch zu anderen Zwecken geeignet ist.

## Patentansprüche

1. Verfahren zur Herstellung eines Werkstücks, dessen Werkstoff mehrere Metalle enthält, bei dem das Werkstück einer Atmosphäre ausgesetzt wird, wobei eine Temperatur und ein Sauerstoff-Partialdruck der Atmosphäre derart eingestellt werden, daß für zumindest zwei Metalle des Werkstoffs eine Bildung jeweils höchstens eines Metalloxides oder Mischoxides gefördert und eine Bildung jeweils aller anderen Metalloxide unterdrückt wird.

2. Verfahren, insbesondere nach Anspruch 1, zur Herstellung eines Werkstücks, dessen Werkstoff mehrere Metalle enthält, bei dem das Werkstück einer Atmosphäre ausgesetzt wird, wobei eine Temperatur und ein Sauerstoff-Partialdruck der Atmosphäre zunächst derart eingestellt werden, daß für zumindest ein erstes Metall des Werkstoffs eine Bildung eines Metalloxides gefördert und eine Bildung aller anderen Metalloxide unterdrückt wird, und daß für zumindest ein zweites Metall des Werkstoffs eine Bildung aller Metalloxide unterdrückt wird, wonach die Temperatur und/oder der Sauerstoff-Partialdruck der Atmosphäre derart geändert werden, daß für das zumindest eine zweite Metall des Werkstoffs eine Bildung höchstens eines Metalloxides gefördert und eine Bildung aller anderen Metalloxide unterdrückt wird.

3. Verfahren nach Anspruch 2, **dadurch gekennzeichnet, daß** das gebildete Metalloxid des ersten Metalls chemisch stabiler als das gebildete Metalloxid des zweiten Metalls.

4. Verfahren nach einem der vorhergehenden Ansprüche, **dadurch gekennzeichnet, daß** die Temperatur der Atmosphäre im wesentlichen konstant ist.

5. Verfahren nach einem der vorhergehenden Ansprüche, **dadurch gekennzeichnet, daß** die Atmosphäre zumindest zwei Verbindungen enthält, wobei eine erste Verbindung Sauerstoff aufweist, daß die erste Verbindung mit zumindest einer zweiten Verbindung und Sauerstoff in einem chemischen Reaktionsgleichgewicht steht, so daß der Sauerstoff-Partialdruck der Atmosphäre durch ein Mischungsverhältnis zwischen der ersten und der zweiten Verbindung bestimmt ist, und daß das Mischungsverhältnis von außen vorgegeben wird.

6. Verfahren nach einem der vorhergehenden Ansprüche, **dadurch gekennzeichnet, daß** eine erste Verbindung Wasser und eine zweite Verbindung Wasserstoff ist.

7. Verfahren nach einem der vorhergehenden Ansprüche, **dadurch gekennzeichnet, daß** das Mischungsverhältnis über einen Grad einer Befeuchtung von Wasserstoff eingestellt wird.

8. Verfahren nach einem der vorhergehenden Ansprüche, **dadurch gekennzeichnet, daß** der Werkstoff zumindest eines der Elemente Eisen, Chrom, Nickel, Molybdän, Mangan, Kupfer, Titan und Niob enthält.

9. Wärmeübertrager, insbesondere für ein Brennstoffzellensystem, oder Brennstoffzellenstapel, insbesondere Mittel- oder Niedertemperatur-Brennstoffzellenstapel, **dadurch gekennzeichnet, daß** zumindest ein Bestandteil des Wärmeübertragers beziehungsweise des Brennstoffzellenstapels mit einem Verfahren nach einem der vorhergehenden Ansprüche herstellbar ist.
